# EUROPÄISCHE PATENTANMELDUNG

(11) **EP 3 187 328 A1**
(43) Veröffentlichungstag der Anmeldung: **05.07.2017**
(21) Anmeldenummer: 16182193.9
(22) Anmeldetag: 10.11.2006
(51) Int. Cl.: B29C 67/00, B33Y 10/00, B33Y 30/00, B33Y 50/02

(54) **KONTINUIERLICHES GENERATIVES VERFAHREN UND VORRICHTUNG ZUR HERSTELLUNG EINES DREIDIMENSIONALEN OBJEKTS**

(62) Teilanmeldung aus: 06829005.5
(71) Anmelder: Envisiontec GmbH, 45968 Gladbeck (DE)
(72) Erfinder: SHKOLNIK, Alexandr, Los Angeles, CA California 90046 (US); EL-SIBLANI, Ali, Dearborn Heights, MI Michigan 48127 (US); JOHN, Hendrik, 9470 Buchs SG (CH)
(74) Vertreter: Prüfer & Partner mbB Patentanwälte · Rechtsanwälte

(57) **Zusammenfassung**

Verfahren bzw. eine Vorrichtung zur Herstellung eines dreidimensionalen Objekts, wobei ein photopolymerisierbares Materials (3) durch simultanes oder annähernd simultanes Bestrahlen eines Baufeldes in einer Bauebene mittels elektromagnetischer Strahlung (1) verfestigt wird, wobei eine momentane Durchhärtetiefe des photopolymerisierbaren Materials während eines kontinuierlichen Bauabschnits durch eines Strahlungsintensität eines jeden individuellen Bildpunkts innerhalb einer projizierten gerasterten Bildmask und durch die Steuerung der Verfahrensgeschwindigkeit der das zu generiende Objekt tragenden Trägerplattform von der Bauebene weg gesteuert wird. Ausführungsformen geeigneter Vorrichtungen werden ebenfalls beschrieben.

## Beschreibung

### Anwendungsgebiet

Die Erfindung betrifft ein Verfahren und eine Vorrichtung zur Herstellung eines dreidimensionalen Objekts durch Verfestigen eines Materials, der durch Eintrag stimulierender Energie wie elektromagnetischer Strahlung verfestigbar ist. Das verfestigbare Material umfaßt üblicherweise einen Kunststoff, der photopolymerisierbar bzw. lichthärtbar ist.

### Stand der Technik

Für den schritt- oder schichtweisen Aufbau dreidimensionaler Objekte aus photo- und insbesondere lichthärtenden Polymeren bzw. Kunststoffen werden in der Literatur unterschiedlichste Verfahren angegeben, siehe hierzu "Automated Fabrication - Improving Productivity in Manufacturing" von Marshall Burns, 1993 (ISBN 0-13-119462-3).

Bei herkömmlichen Stereolithographie-Systemen befindet sich zum Beispiel eine Trägerplattform innerhalb eines mit photopolymerisierbarem bzw. lichthärtbarem Material gefüllten Beckens, wobei eine Schicht an der Oberfläche des Materials selektiv z.B. mittels eines scannenden Laserstrahls bis zu einer definierten Schichtdicke ausgehärtet wird. Nach Aushärtung einer Schicht wird die Trägerplattform um die folgende Schichtdicke abgesenkt und eine neue Schicht unausgehärteten Materials aufgetragen.

Bei der selektiven Belichtung durch Laser, das eine punktuelle Energiezufuhr einschließt und bei der nicht die gesamte Baufläche in einem Mal oder annähernd einem Mal belichtet wird, muss in separaten Schichten ausgehärtet und mit der Trägerplatte verfahren werden, um Baufehler zu vermeiden und möglichst akkurate Bauteile zu erzielen. Durch den Aufbau in Schichten mußte das herkömmliche Stereolithographieverfahren in einer Vielzahl entsprechender Schritte pro Schicht ablaufen.

### Aufgabe der Erfindung

Aufgabe der Erfindung ist es, ein verbessertes Verfahren und eine verbesserte Vorrichtung zur Herstellung eines dreidimensionalen Objekts durch Verfestigen eines Materials, der durch Eintrag stimulierender Energie wie elektromagnetischer Strahlung verfestigbar ist, bereitzustellen.

### Zusammenfassung der Erfindung

Diese Aufgabe wird gelöst durch ein Verfahren mit den Merkmalen nach Anspruch 1 oder 8 Bevorzugte Weiterbildungen des erfindungsgemäßen Verfahrens sind in den Unteransprüchen angegeben.

Gemäß einem ersten Aspekt stellt die vorliegende Erfindung bereit: ein Verfahren zur Herstellung mindestens eines dreidimensionalen Objekts, wobei das Verfahren ein Verfestigen eines photopolymerisierbaren Materials durch simultanes oder annähernd simultanes Bestrahlen eines Baufeldes oder Teilbaufeldes in einer Bauebene mittels elektromagnetischer Strahlung umfaßt, wobei ein Abstand zwischen einer Trägerplattform, an der das zu generierende Objekt aufgebaut wird, und der Bauebene während mindestens einer Bestrahlungsphase verändert wird.

Gemäß einem zweiten Aspekt stellt die vorliegende Erfindung bereit: ein Verfahren zur Herstellung mindestens eines dreidimensionalen Objekts, wobei das Verfahren ein Verfestigen eines photopolymerisierbaren Materials durch simultanes oder annähernd simultanes Bestrahlen einer Bauebene mittels elektromagnetischer Strahlung umfasst, wobei das dreidimensionale Objekt in einer Hauptbaurichtung über eine festgelegte momentane Durchhärtetiefe hinaus während einer Bestrahlungsphase verfestigt wird, ohne daß der Eintrag von elektromagnetischer Energie während der Bestrahlungsphase unterbrochenen wird.

Gemäß einem dritten und vierten Aspekt stellt die vorliegende Erfindung bereit: Verfahren zur Herstellung mindestens eines dreidimensionalen Objekts, wobei das Verfahren ein Verfestigen eines photopolymerisierbaren Materials durch simultanes oder annähernd simultanes Bestrahlen einer Bauebene mittels elektromagnetischer Strahlung umfasst, wobei eine momentane Durchhärtetiefe des photopolymerisierbaren Materials während eines Bauabschnittes durch eine Verfahrgeschwindigkeit der das zu generierende Objekt tragenden Trägerplattform von der Bauebene weg gesteuert wird. Alternativ oder in Kombination mit dieser Steuerung wird eine momentane Durchhärtetiefe des photopolymerisierbaren Materials während eines Bauabschnittes durch die Strahlungsintensität eines jeden individuellen Bildpunktes (Pixels) innerhalb der gerasterten projizierten Bildmaske gesteuert. Die Strahlungsintensität kann z.B. durch Einstellung einer Graustufe oder eines Farbwerts bezogen auf jeweilige Pixel variiert werden.

Gemäß einem weiteren Aspekt stellt die vorliegende Erfindung eine Vorrichtung zur Herstellung mindestens eines dreidimensionalen Objekts durch Verfestigen eines photopolymerisierbaren Materials bereit, wobei die Vorrichtung umfasst: eine Einrichtung zum simultanen oder annähernd simultanen Eintrag von elektromagnetischer Energie auf ein Baufeld oder Teilbaufeldes in einer Bauebene mittels elektromagnetischer Strahlung; eine Trägerplattform, die das zu generierende Objekt tragen kann; ein photopolymerisierbares Material mit einer Bauebene, an der das photopolymerisierbare Material durch den Eintrag von elektromagnetischer Energie verfestigt wird; und eine Steuereinrichtung, die darauf angepaßt ist, die Einrichtung zum Eintrag von elektromagnetischer Energie so zu steuern, dass ein Abstand zwischen der Trägerplattform und der Bauebene während mindestens einer Bestrahlungsphase verändert wird.

Gemäß einem noch anderen Aspekt stellt die vorliegende Erfindung eine Vorrichtung zur Herstellung mindestens eines dreidimensionalen Objekts durch Verfestigen eines photopolymerisierbaren Materials bereit, wobei die Vorrichtung umfaßt: eine Einrichtung zum simultanen oder annähernd simultanen Eintrag von elektromagnetischer Energie in eine Bauebene mittels elektromagnetischer Strahlung; und eine Steuereinrichtung, die darauf angepaßt ist, die Einrichtung zum Eintrag von elektromagnetischer Energie so zu steuern, dass das dreidimensionale Objekt in einer Hauptbaurichtung über eine festgelegte momentane Durchhärtetiefe des photopolymerisierbaren Materials hinaus während einer Bestrahlungsphase verfestigt wird, ohne den Eintrag von elektromagnetischer Energie während der Bestrahlungsphase zu unterbrechen.

Gegenstände der vorliegenden Erfindung sind in den folgenden Punkten zusammengefasst:
(1) Verfahren zur Herstellung mindestens eines dreidimensionalen Objekts, wobei das Verfahren ein Verfestigen eines photopolymerisierbaren Materials durch simultanes oder annähernd simultanes Bestrahlen eines Baufeldes oder Teilbaufeldes in einer Bauebene mittels elektromagnetischer Strahlung umfasst, wobei ein Abstand zwischen einer Trägerplattform, an der das zu generierende Objekt aufgebaut wird, und der Bauebene während mindestens einer Bestrahlungsphase verändert wird.
(2) Verfahren nach (1), dadurch gekennzeichnet, daß der Abstand zwischen Trägerplattform und Bauebene verändert wird, indem die Trägerplattform von der Bauebene weg bewegt wird.
(3) Verfahren nach (1) oder (2), dadurch gekennzeichnet, daß der Abstand zwischen Trägerplattform und Bauebene während des gesamten Bauprozesses verändert wird.
(4) Verfahren nach einem von (1) bis (3), dadurch gekennzeichnet, dass das photopolymerisierbare Material in ein Becken vorgelegt wird und dass der Füllstand des unpolymerisierten Materials im Becken während des Bauvorganges konstant gehalten wird.
(5) Verfahren zur Herstellung mindestens eines dreidimensionalen Objekts, wobei das Verfahren ein Verfestigen eines photopolymerisierbaren Materials durch simultanes oder annähernd simultanes Bestrahlen einer Bauebene mittels elektromagnetischer Strahlung umfasst, wobei das dreidimensionale Objekt in einer Hauptbaurichtung über eine festgelegte momentane Durchhärtetiefe hinaus während einer Bestrahlungsphase verfestigt wird, ohne daß der Eintrag von elektromagnetischer Energie während der Bestrahlungsphase unterbrochenen wird.
(6) Verfahren nach einem der vorangehenden Punkte, dadurch gekennzeichnet, daß die das zu generierende Objekt tragende Trägerplatte kontinuierlich von der Bauebene weg mit konstanter oder mit variabler Geschwindigkeit oder mit einer Kombination konstanter und variabler Geschwindigkeiten verfahren wird.
(7) Verfahren nach einem der vorangehenden Punkte, dadurch gekennzeichnet, dass ein Materialauftrag von unpolymerisiertem photopolymerisierbarem Material automatisch durch Nachfließen erfolgt.
(8) Verfahren nach einem der vorangehenden Punkte, dadurch gekennzeichnet, dass ein Materialauftrag von unpolymerisiertem photopolymerisierbarem Material periodisch oder alternierend mittels eines Wischers unterstützt wird.
(9) Verfahren nach einem der vorangehenden Punkte, dadurch gekennzeichnet, dass eine während des kontinuierlichen Generierens des dreidimensionalen Objekts auftretende konvexe oder konkave Wölbung des photopolymerisierbaren Materials in der Bauebene durch eine alternierende oder periodische horizontale Bewegung oder Einbringung eines Glättungselements in einer definierten Höhe über der Bauebene eliminiert und eine planare oder im wesentlichen planare Material-Oberfläche wieder hergestellt wird.
(10) Verfahren nach (8) oder (9), dadurch gekennzeichnet, dass während der Einbringung eines Wischers oder eines Glättungselementes der kontinuierliche Generierungsprozess, einschließlich einer ununterbrochenen Bestrahlung und/oder eines kontinuierlichen Verfahrens der Trägerplatte, nicht unterbrochen wird.
(11) Verfahren zur Herstellung mindestens eines dreidimensionalen Objekts, wobei das Verfahren ein Verfestigen eines photopolymerisierbaren Materials durch simultanes oder annähernd simultanes Bestrahlen einer Bauebene mittels elektromagnetischer Strahlung umfasst, dadurch gekennzeichnet, dass eine momentane Durchhärtetiefe des photopolymerisierbaren Materials während eines Bauabschnittes durch eine Verfahrgeschwindigkeit der das zu generierende Objekt tragenden Trägerplattform von der Bauebene weg gesteuert wird.
(12) Verfahren zur Herstellung mindestens eines dreidimensionalen Objekts, wobei das Verfahren ein Verfestigen eines photopolymerisierbaren Materials durch simultanes oder annähernd simultanes Bestrahlen einer Bauebene mittels elektromagnetischer Strahlung umfasst, dadurch gekennzeichnet, dass eine momentane Durchhärtetiefe des photopolymerisierbaren Materials während eines Bauabschnittes durch die Strahlungsintensität eines jeden individuellen Bildpunktes (Pixels) innerhalb der gerasterten projizierten Bildmaske gesteuert wird.
(13) Verfahren nach (12), dadurch gekennzeichnet, dass eine momentane Durchhärtetiefe des photopolymerisierbaren Materials während eines Bauabschnittes zusätzlich durch eine Steuerung der Verfahrgeschwindigkeit der das zu generierende Objekt tragenden Trägerplattform von der Bauebene weg gesteuert wird.
(14) Verfahren nach einem der vorangehenden Punkte, dadurch gekennzeichnet, dass die Belichtung des photopolymerisierbaren Materials über eine Maskenbelichtung mittels eines Projektionssystems durchgeführt wird.
(15) Verfahren nach einem der vorangehenden Punkte, dadurch gekennzeichnet, dass die Belichtung des photopolymerisierbaren Materials über eine Laserprojektion durchgeführt wird, mit dem ein für das menschliche Auge stehendes Bild erzeugbar ist.
(16) Verfahren nach einem der vorangehenden Punkte, umfassend eine oder mehrere Bestrahlungsphase(n) und mindestens eine Phase, in der ein Eintrag von elektromagnetischer Strahlung in die Bauebene unterbrochen ist, aber weiter der Abstand zwischen der Trägerplattform und der Bauebene verändert wird.
(17) Verfahren nach (16), dadurch gekennzeichnet, dass die Unterbrechung des Eintrags von elektromagnetischer Strahlung in die Bauebene beschränkt ist auf Phase(n), in denen ein Glättungselement betätigt wird und/oder in denen ein neuer Bildaufbau erfolgt.
(18) Verfahren nach (16) oder (17), dadurch gekennzeichnet, dass während einer Unterbrechung des Eintrags von elektromagnetischer Strahlung in die Bauebene eine Verfahrgeschwindigkeit der Trägerplattform auf ein Minimum reduziert wird.
(19) Verfahren nach einem der vorangehenden Punkte, dadurch gekennzeichnet, daß die Bauebene durch eine Oberfläche des photopolymerisierbaren Materials definiert wird.
(20) Vorrichtung zur Herstellung mindestens eines dreidimensionalen Objekts durch Verfestigen eines photopolymerisierbaren Materials, umfassend:
   eine Einrichtung zum simultanen oder annähernd simultanen Eintrag von elektromagnetischer Energie auf ein Baufeld oder Teilbaufeld in einer Bauebene mittels elektromagnetischer Strahlung; eine Trägerplattform, die das zu generierende Objekt tragen kann; und eine Steuereinrichtung, die darauf angepaßt ist, die Einrichtung zum Eintrag von elektromagnetischer Energie so zu steuern, dass ein Abstand zwischen der Trägerplattform und der Bauebene während mindestens einer Bestrahlungsphase verändert wird.
(21) Vorrichtung nach (20), dadurch gekennzeichnet, dass die Steuereinrichtung einen Aktuator für die Trägerplattform so ansteuert, dass die Trägerplattform ununterbrochen von der Bauebene weg bewegt wird.
(22) Vorrichtung nach (20) oder (21), dadurch gekennzeichnet, dass der Aktuator für die Trägerplattform durch die Steuereinrichtung so ansteuerbar ist, dass die Verfahrgeschwindigkeit der Trägerplattform weg von der Bauebene variabel ist.
(23) Vorrichtung zur Herstellung eines dreidimensionalen Objekts durch Verfestigen eines photopolymerisierbaren Materials, umfassend:
   eine Einrichtung zum simultanen oder annähernd simultanen Eintrag von elektromagnetischer Energie in eine Bauebene mittels elektromagnetischer Strahlung; und
   eine Steuereinrichtung, die darauf angepaßt ist, die Einrichtung zum Eintrag von elektromagnetischer Energie so zu steuern, dass das dreidimensionale Objekt in einer Hauptbaurichtung über eine festgelegte momentane Durchhärtetiefe des photopolymerisierbaren Materials hinaus während einer Bestrahlungsphase verfestigt wird, ohne den Eintrag von elektromagnetischer Energie während der Bestrahlungsphase zu unterbrechen.
(24) Vorrichtung nach einem von (20) bis (23), dadurch gekennzeichnet, dass das photopolymerisierbare Material so bereitgestellt ist, daß dessen Bildungsoberfläche, an der das Material beim Eintrag elektromagnetischer Energie verfestigt wird, die Bauebene der Einrichtung zum Eintrag elektromagnetischer Energie definiert.
(25) Vorrichtung nach einem von (20) bis (24), ferner mit einem Glättungselement, der periodisch oder alternierend die Bauebene glättet.
(26) Vorrichtung nach einem von (20) bis (25), dadurch gekennzeichnet, dass die Einrichtung zum simultanen oder annähernd simultanen Eintrag von elektromagnetischer Energie ein Projektionssystem zur Erzeugung einer Belichtungsmaske umfasst.
(27) Vorrichtung nach einem von (20) bis (26), dadurch gekennzeichnet, dass die Einrichtung zum simultanen oder annähernd simultanen Eintrag von elektromagnetischer Energie ein Laserprojektionssystem umfaßt, mit dem ein für das menschliche Auge stehendes Bild erzeugbar ist.
(28) Vorrichtung gemäß einem von (20) bis (27), dadurch gekennzeichnet, dass die Steuereinrichtung darauf angepaßt ist, die Einrichtung zum Eintrag von elektromagnetischer Energie oder einen Verschluss so zu steuern, dass der Eintrag von elektromagnetischer Energie auf das Baufeld in der Bauebene unterbrochen ist während eines ununterbrochenen Verfahrens der Trägerplatte von der Bauebene.
(29) Vorrichtung gemäß einem von (20) bis (28), ferner mit einem Füllstandsmesser zum Bestimmen des Füllstands eines mit dem photopolymerisierbaren Material füllbaren Beckens, und einem Reservoir für weiteres photopolymerisierbares Material, wobei die Steuereinrichtung durch Empfang von Informationen des Füllstandsmessers darauf angepaßt ist, das Reservoir so anzusteuern, dass photopolymerisierbares Material in das Becken abgegeben oder daraus entnommen wird.
(30) Dreidimensionales Objekt, das aus einem durch elektromagnetische Strahlung photopolymerisierten Material gebildet wurde durch kontinuierliches Polymerisieren des photopolymerisierbaren Materials, jedoch ohne Bildung irgendwelcher getrennt polymerisierter Strukturelemente, die separate Schichten, Punkte oder Stränge des Materials einschließen könnten.
(31) Dreidimensionales Objekt gemäß (30), erhalten durch einen ununterbrochenen Stereolithographieprozeß ohne Schichtenbildung.
(32) Dreidimensionales Objekt gemäß (30) oder (31), dadurch gekennzeichnet, daß es in Richtung des kontinuierlichen Materialaufbaus unterschiedliche Querschnittsflächen aufweist.
(33) Dreidimensionales Objekt gemäß einem von (30) bis (32), dadurch gekennzeichnet, daß es ein vollständiges 3D-Objekt, nur ein Teil eines gesamten 3D-Objekts, oder eines von mehreren dreidimensionalen Objekten - zeitgleich oder zeitlich verschieden gebildet - ist.

Durch Anwenden des erfindungsgemäßen Verfahrens ist es möglich, mindestens ein dreidimensionales Objekt bereitzustellen, das aus einem durch elektromagnetische Strahlung photopolymerisierten Material durch kontinuierliches Polymerisieren des photopolymerisierbaren Materials gebildet wurde, jedoch ohne Bildung irgendwelcher getrennt polymerisierter Strukturelemente, die Schichten, Punkte oder Stränge des Materials einschließen könnten.

Durch die hier verwendete Bezeichnung "mindestens" ein dreidimensionales Objekt ist gemeint, daß das erfindungsgemäße Verfahren dazu verwendet werden kann, ein vollständiges 3D-Objekt oder nur ein Teil eines gesamten 3D-Objekts zu bilden, oder mehrere dreidimensionale Objekte oder Teilobjekte zeitgleich oder zeitlich verschieden zu bilden, einschließlich einen Fall, bei dem mehrere Teilstrukturen eines komplexen Objekts zeitgleich oder zeitlich verschieden gebildet werden.

Mit den Ausdrücken "Teilobjekt" oder "Teilstrukturen" sind nicht nur gewollte Strukturen des dreidimensionalen Endobjekts gemeint, sondern auch Stützobjekte oder -strukturen, die nur prozeßtechnisch generiert werden und im dreidimensionalen Endobjekt nicht mehr enthalten sind.

### Beschreibung der Erfindung und deren Vorteile

Im Rahmen der vorliegenden Erfindung wurde überraschend gefunden, daß entgegen der herkömmlichen Stereolithographietechnik auf eine vollkommen schichtweise Generierung des dreidimensionalen Objekts verzichtet werden kann; daß vielmehr eine schichtenunabhängige Betriebsweise durchgeführt und die Vorrichtung entsprechend ausgestaltet werden kann.

Durch die erfindungsgemäße Lösung und durch die bevorzugten Weiterbildungen werden herkömmliche Verfahren und Vorrichtungen des Stands der Technik verbessert, und es können die nachfolgend beschriebenen Merkmale vorgesehen bzw. die jeweils angegebenen Vorteile - allein, alternative oder in Kombination - erzielt werden:

Während eines ununterbrochenen Belichtungsvorganges, d.h. während mindestens einer Bestrahlungsphase, und vorzugsweise während des gesamten Bauprozesses des dreidimensionalen Objekts kann sich der Abstand der Trägerplatte für das dreidimensionale Objekt von der Bauebene kontinuierlich, d.h. ohne Unterbrechung, ändern.

Dadurch kann erfindungsgemäß auf ein Verfestigen des Materials in einem Prozess mit vielen Schritten und jeweils pro Schritt erfolgter Schichtbildung verzichtet werden. Falls aufgrund von etwaigen Belichtungsunterbrechungen doch noch leichte Grenzschichten auftreten, so kann eine solche Grenzschichtbildung auf eine geringe Zahl minimiert werden oder sogar ganz eliminiert werden; z.B. begrenzt auf Übergänge unterschiedlicher Bestrahlungsflächen oder auf die Umschaltung auf unterschiedliche Bitmaps pro Bestrahlungsebene, die jeweils für verschiedene Strukturbereiche des dreidimensionalen Objekts verwendet werden.

Ferner wird erfindungsgemäß der Bauprozess beschleunigt.

Durch Unterbleiben einer Schichtbauweise kann ferner auf die Generierung von geschnittenen (sliced) Bilddaten verzichtet werden.

Die erfindungsgemäße kontinuierliche Änderung des besagten Abstands kann je nach gewünschter Ausführungsform realisiert werden, indem die Trägerplatte von der Bauebene weg bewegt wird, und/oder indem die Bauebene bzw. der Füllstand des photopolymerisierbaren Materials von der Trägerplatte weg bewegt wird. Letzteres kann im Fall einer Bestrahlung von oberhalb der Trägerplatte durch Anheben der Bauebene bzw. Anheben des Füllstandes des photopolymerisierbaren Materials gegenüber der Trägerplatte erfolgen. Ein Wegbewegen der Trägerplatte von der Bauebene ist erfindungsgemäß bevorzugt.

Wenn der besagte Abstand erfindungsgemäß während eines Belichtungsvorgangs und vorzugsweise während des gesamten Bauprozesses des dreidimensionalen Objekts kontinuierlich verändert wird, können Abstufungen in der Hauptbaurichtung (vertikale Z-Richtung) - anders als im herkömmlichen schichtweisen Prozess - reduziert und vorteilhaft minimiert werden, gegebenenfalls sogar auf eine kontinuierliche Abstufung bis hin zur Stufenfreiheit eingestellt werden. Anders als im herkömmlichen schichtweisen Prozess sind keine durch vorbestimmte Schichten festgelegte, diskrete Abstufungen in Z erforderlich. Vielmehr sind Abstufungen in der Z-Baurichtung flexibel je nach Baubedingungen steuerbar und gegebenenfalls variabel einstellbar oder sogar in einer kontinuierlichen Struktur ausführbar.

Das dreidimensionale Objekt kann in der Hauptbaurichtung (normalerweise die Z-Richtung) verfestigen bzw. wachsen, ohne daß jeweils der Eintrag von elektromagnetischer Energie während einer Bestrahlungsphase und gegebenenfalls während des gesamten Bauprozesses unterbrochenen wird. Das derartige kontinuierliche Anwachsen von verfestigtem Material in Z-Richtung während einer Bestrahlungsphase kann folglich über eine übliche, durch den angewandten Eintrag von elektromagnetischer Energie (Bestrahlung) und/oder durch ein verwendetes photopolymerisierbares Material festgelegte Durchhärtetiefe hinaus erfolgen, die bei der herkömmlichen schichtweisen Verfestigung realisierbar war. Durch diese erfindungsgemäße Arbeitsweise ist es daher möglich, Bestrahlungsphasen gegenüber der herkömmlichen schichtweisen Bestrahlung signifikant zu verlängern und während dieser Phasen kontinuierliche, einheitliche Verfestigungstiefen zu erreichen, die herkömmliche Schichten-Verfestigungstiefen von üblicherweise im Mikrometerbereich um ein Vielfaches übersteigen. Eine erfindungsgemäß mit jeweils einer Bestrahlungsphase realisierbare kontinuierliche, einheitliche Verfestigungstiefe kann zum Beispiel in Größenordnungen im Bereich von deutlich über 1mm liegen, bevorzugt bei über 2,5mm, weiter bevorzugt bei über 1cm und insbesondere bei über 10cm. Falls gewünscht kann durch Vermeiden von substantiellen Bestrahlungsunterbrechungen sogar im gesamten dreidimensionalen Objekt eine kontinuierliche (ununterbrochene), einheitliche Verfestigung in Masse bereitgestellt werden.

Durch die schichtenunabhängige, kontinuierliche Betreibsweise ist es erfindungsgemäß sogar möglich, eine momentane Durchhärtetiefe des photopolymerisierbaren Materials gezielt zu beeinflussen und zu steuern. Besonders geeignete Mittel zur Steuerung der Durchhärtetiefe ist die Einstellung der Verfahrgeschwindigkeit der das zu generierende Objekt tragenden Trägerplattform von der Bauebene weg, und die Einstellung der Strahlungsintensität pro Pixels (Graustufe oder Farbwert), jeweils allein oder in Kombination.

Eine möglichst ununterbrochene Betriebsweise zum Eintrag von elektromagnetischer Energie kann eine Projektionseinheit schonen und/oder den Aufbau der gesamten Vorrichtung vereinfachen. Ferner ist es möglich, die zum Aufbau eines dreidimensionalen Objekts erforderliche Datenmenge zu verringern und einen Rechenbedarf dafür zu reduzieren.

Erfindungsgemäßes Verfahren und erfindungsgemäße Vorrichtung können jeweils so flexibel ausgestaltet werden, daß zum Aufbau eines gesamten dreidimensionalen Objekts einerseits bestimmte, gegebenenfalls mehrere ununterbrochene Bestrahlungsphasen, andererseits jedoch auch mindestens eine Phase ohne oder mit reduzierter Bestrahlung der Bauebene eingeschlossen sein können. Die wie oben beschriebene Veränderung des besagten Abstands ist jedenfalls während der (den) ununterbrochenen Bestrahlungsphase(n), optional auch während der mindestens einen Phase ohne bzw. reduzierter Bestrahlung der Bauebene vorgesehen. Eine mindestens eine Phase bei reduzierter, ggf. sogar ohne Bestrahlung der Bauebene muß nicht, kann aber zum Beispiel genutzt werden für eine oder mehrere der folgenden Ausführungen oder Bedingungen:
- bei Änderung der bestrahlten Querschnittsfläche in der Bauebene,
- bei Änderung einer Belichtungsmaske pro Querschnittsfläche,
- bei Anwendung eines Verschlusses, und/oder
- zum Einsatz eines Glättungselements wie eines Wischers.

Die jeweilige Dauer der mindestens einen Phase ohne Bestrahlung der Bauebene kann, falls angewendet, kurz und vorzugsweise sehr kurz sein, beispielsweise bis maximal 10s, bevorzugt bis maximal 1s, weiter bevorzugt bis maximal 10ms und insbesondere bis maximal 1ms.

Ein weiterer Vorteil der Erfindung besteht jedoch darin, daß eine Unterbrechung der Bestrahlung nicht notwendigerweise durchgeführt werden muss und z.B. während der vorerwähnten Ausführungen oder Bedingungen weiter betrieben werden kann.

Eine Änderung des besagten Abstands kann während des Bauprozesses variabel eingestellt werden. Auf diese Weise kann der Grad der Durchhärtung, bevorzugt durch die Verfahrgeschwindigkeit in der Hauptbaurichtung wie der Z-Richtung, gesteuert werden.

Durch den kontinuierlichen Verfahrprozess in der Hauptbaurichtung wie der Z-Richtung können Bestandteile der Vorrichtung, wie Wischer oder ähnliches, Schichten-unabhängig eingesetzt werden. Im Unterschied zur herkömmlichen Bauweise können Bestandteile der Vorrichtung unter anderen Gesichtspunkten, die für den Bauprozeß bzw. das erzeugte dreidimensionale Objekt günstiger sind, eingesetzt werden, z.B. Länge in Z-Richtung mit gleicher Querschnittsfläche in der horizontalen (XY-) Bauebene.

Es kann ein optimierter Bestrahlungsprozess durchgeführt werden, bei dem erst dann eine neue Bestrahlungsmaske generiert bzw. verwendet wird, wenn die (XY-) Querschnittsfläche sich entlang der Z-Höhe/Position verändert.

Es kann mit einer beliebig hohen Auflösung in Z für die Belichtungsmasken gearbeitet werden, die in Abhängigkeit von der verfahrenen Z-Höhe nacheinander projiziert werden.

Um Fehler während des Bauprozesses, insbesondere beim Eintrag der elektromagnetischen Strahlung wie der Belichtung, zu vermeiden, ist es wichtig, das zu bestrahlende Baufeld, d.h. die jeweils momentan zu bestrahlende XY-Querschnittsfläche oder XY-Teilquerschnittsfläche der Bauebene und vorzugsweise das gesamte Baufeld, simultan oder annähernd simultan zu bestrahlen.

Dies kann durch ein Projektionssystem mittels Maskenbestrahlung umgesetzt werden, was eine simultane Bestrahlung gewährleistet. Ein besonders bevorzugtes Projektionssystem zur Erzeugung einer Belichtungsmaske beruht auf Basis der an sich bekannten DLP^{®}/DMD^{®}-Technik.

Eine Alternative zur Maskenbestrahlung stellt eine Bestrahlung durch ein Projektionssystem dar, bei dem ein stehendes Bild oder ein nahezu stehendes Bild erzeugt wird und somit eine annähernd simultane Bestrahlung erreicht wird, beispielsweise durch ein Laser-basiertes Projektionssystem mit einem ausreichend schnellen Abscannen des gewünschten zu bestrahlenden Baufeldes in der Bauebene. Eine annähernd simultane Bestrahlung bzw. ein ausreichend schnelles Abscannen ist typischerweise dann erreicht, wenn ein für ein menschliches Auge stehendes oder nahezu stehendes Bild erzeugt wird. Geeignete Bereiche von Bildfrequenzen oder Bildwiederholfrequenzen, um ein für ein menschliches Auge stehendes oder nahezu stehendes Bild zu erzeugen, sind aus Videotechniken und Projektionstechniken bekannt und können entsprechend angewandt werden. Ein Beispiel eines Projektionssystems unter Verwendung eines für ein menschliches Auge stehendes Bild wird beschrieben in WO 01/14125 A1; jedoch ist die vorliegende Erfindung keinesfalls auf die Anwendung eines solchen Projektionssystems zur Bereitstellung einer annähernd simultanen Bestrahlung beschränkt.

Als photopolymerisierbares oder verfestigbares Material wird erfindungsgemäß irgendein Material verstanden, das einen Kunststoff und gegebenenfalls weitere Bestandteile umfassen kann und mittels Eintrag von elektromagnetischer Strahlung wie z.B. UV-Strahlung, sichtbarem Licht, IR-Strahlung, Elektronenstahlung, Röntgenstrahlung oder dergleichen verfestigbar ist. Geeigneterweise kann ein Material verwendet werden, das durch UV-Strahlung und/oder sichtbares Licht polymerisierbar ist, z.B. ein Material, das einen Kunststoff umfaßt, der mindestens eine ethylenisch ungesättigte Verbindung (einschließlich (Meth)Acrylat-Monomere und -Polymere) und/oder mindestens eine Epoxidgrupppe enthält. Geeignete weitere Zusatzstoffe des verfestigbaren Materials sind zum Beispiel anorganische und/oder organische Füllstoffe, Farbmittel, Viskose-einstellende Mittel, sind aber nicht darauf beschränkt.

Als Glättungselement kann ein Wischer, ein Streifer, eine Rolle, ein Schieber oder dergleichen eingesetzt werden. Bevorzugt wird ein "Docter-Blade"-Verfahren, bei dem eine Vakuum-Kammer als Hilfs-Materialreservoir dient und über die Oberfläche "wischt", oder das bekannte "Curtain-Coating" Verfahren.

Das erfindungsgemäße System erlaubt die Bereitstellung eines dreidimensionalen Objekts, das aus einem durch elektromagnetische Strahlung photopolymerisierten Material gebildet wurde, indem es durch kontinuierlichen Materialaufbau photopolymerisiert ist, ohne dass separat polymerisierte Strukturelemente wie Schichten, Punkte oder Stränge des photopolymerisierbaren Materials gebildet würden. Das erfindungsgemäß bereitgestellte dreidimensionale Objekt unterscheidet sich somit von herkömmlichen dreidimensionalen Objekten, die durch andere Freiformtechniken erhalten wurden, insbesondere durch die Photopolymerisation in Masse ohne Grenzflächen zwischen getrennt gehärteten Bereichen des photopolymerisierbaren Materials. Anders als bei der herkömmlichen Stereolithographie oder anderen herkömmlichen Freiformtechniken wie dem selektiven Lasersintern, der ballistischen Teilchenherstellung, dem Fusionsabscheidungsmodellieren, dem dreidimensionalen Drucken, dem dreidimensionalen Plotten oder weitere Rapid Prototyping Verfahren können erfindungsgemäß über einen ununterbrochenen Stereolithographieprozeß ohne Schichten- oder Strangbildung dreidimensionalen Objekte bereitgestellt werden, die keine separaten Schichten oder einzelne Materialstränge oder -punkte aufweisen. Das erfindungsgemäße Technik ist besonders geeignet zur Bereitstellung eines dreidimensionalen Objekts, das in Richtung des kontinuierlichen Materialaufbaus unterschiedliche Querschnittsflächen aufweist.

### Kurzbeschreibung der Zeichnungen

Die vorliegende Erfindung wird nachfolgend beispielhaft und nicht einschränkend anhand von Zeichnungen näher erläutert. In den Zeichnungen bedeuten:
Fig. 1 zeigt einen schematischen Grundaufbau eines Verfahrens bzw. einer Vorrichtung (im Querschnitt) gemäß einer bevorzugten Ausführungsform der vorliegenden Erfindung, in der von oben bestrahlt wird;
Fig. 2 zeigt einen schematischen Grundaufbau eines Verfahrens bzw. einer Vorrichtung (im Querschnitt) gemäß einer besonderen Betriebsweise in einer Ausführungsform, bei der während einer Bestrahlungsphase gleichzeitig ein Glättungselement betätigt wird; und
Fig. 3 zeigt einen schematischen Grundaufbau eines Verfahrens bzw. einer Vorrichtung (linke Seite im Querschnitt; rechte Seite perspektivisch) in einer Detailansicht gemäß einer weiter bevorzugten Ausführungsform der vorliegenden Erfindung.

### Beschreibung von bevorzugten Ausführungsformen

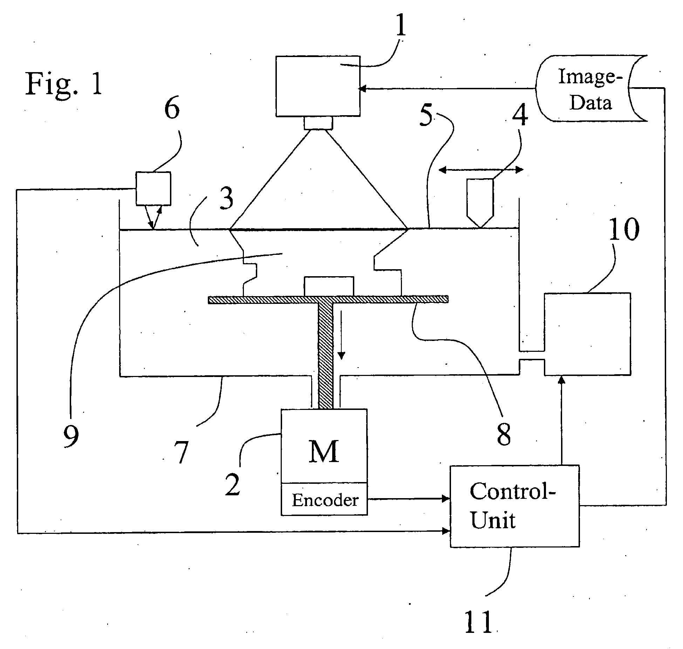

Die Anordnung in Fig. 1 zeigt schematisch im Querschnitt eine Ausführungsform der erfindungsgemäßen Vorrichtung für ein Rapid Prototyping Verfahren auf Basis der Photoverfestigung mittels Laser oder Maskenbelichtung mit Hilfe einer Projektionseinheit 1, wobei sich unterhalb der Projektionseinheit in einem Becken 7 das ein Photopolymer (photopolymerisierbarer Kunststoff) enthaltende, flüssige Material 3 mit einem Niveau der Oberfläche 5 des flüssigen Material 3 befindet. Hier bildet einfach die Oberfläche 5 des flüssigen Material 3 die Projektionsebene des projizierten Bilds und damit die Bauebene. Das flüssige oder zumindest fließfähige Material 3 kann durch ein flüssiges Photopolymer selbst, oder durch eine Mischung oder Lösung des Photopolymers mit einem Trägermaterial gebildet sein. In dem Becken und somit innerhalb des flüssigen Materials befindet sich eine Trägerplatte 8, die in vertikaler Richtung bewegt werden kann. Die Position der Trägerplatte 8 in Z ist zu jedem Zeitpunkt entweder durch einen Encoder oder durch den Einsatz eines Schrittmotors bekannt und kann über die Kontroll-Einheit 11 gesteuert werden. In dieser Ausführungsform wird die Füllhöhe des Materials während des Bauprozesse konstant gehalten. Die Füllhöhe kann mit einem Füllstandssensor 6 ermittelt und über ein Reservoir 10, in dem weiteres flüssiges Polymermaterial 3 enthalten ist, nachreguliert werden.

Die Trägerplatte 8 (mit dem generierten Objekt) wird kontinuierlich unter die Materialoberfläche gefahren, wobei die Tiefenhärtung des selektiv belichteten Photopolymers durch die Verfahrgeschwindigkeit gesteuert werden kann.

Ein Wischer 4 kann in einer definierten Höhe über der Bauebene bzw. Materialoberfläche horizontal bewegt oder eingebracht werden, um während des kontinuierlichen Generierens eine möglicherweise auftretende konvexe oder konkave Wölbung des Materials in der Bauebene (z.B. positiver oder negativer Meniskus) zu eliminieren und eine planare oder im wesentlichen planare Bauebene wieder herzustellen.

Während des kontinuierlichen Verfahrens der Trägerplatte kann die Belichtung unterbrochen werden, z.B. während einer Betätigung des Wischers oder während eines neuen Bildaufbaus. Eine vollständige Unterbrechung oder eine teilweise Reduzierung der Bestrahlung kann vorzugsweise durch einen Verschluß, z.B. durch ein elektromechanisches Element (nicht gezeigt) innerhalb des Strahlengangs umgesetzt werden, oder bei dem Einsatz von Projektionssystemen durch Verändern oder Einstellen der Helligkeits- und Kontrast-Parameter der bildgebenden Einheit realisiert werden.

In dieser bevorzugten Ausführungsform wird während des gesamten Bauprozesses die Trägerplatte kontinuierlich von der Bauebene weg mit konstanter oder variabler Geschwindigkeit verfahren. Die Veränderung der Verfahrgeschwindigkeit beeinflusst dabei den Durchhärtegrad des lichthärtenden Kunsstoffs und kann während des Bauprozesses gezielt gesteuert/geregelt werden, um z.B in einem Bauabschnitt eine Unter- oder Überbelichtung zu erreichen.

Durch das Absenken des generierten Objektes auf der Trägerplattform von der Bauebene weg, unterhalb der Materialoberfläche, fließt neues, frisches, noch nicht anpolymerisiertes Material von außen nach und füllt den abgesenkten Bereich aus.

Dieses Nachfließen, bzw. der Materialauftrag kann periodisch oder alternierend durch einen Wischer unterstützt werden.

Durch die alternierende oder periodische horizontale Bewegung oder Einbringung eines Streifers, Wischers oder Schiebers in einer definierten Höhe über der Bauebene bzw. Materialoberfläche kann ebenso dazu genutzt werden, eine während des kontinuierlichen Generierens auftretende konvexe oder konkave Wölbung des Materials in der Bauebene (z.B. positiver oder negativer Meniskus) zu eliminieren und eine planare oder im wesentlichen planare Bauebene wieder herzustellen.

Im Falle einer Unterbrechung der Bestrahlung, z.B. zum Zweck eines neuen Bildaufbaus und/oder der Bewegung des Wischers, kann die Verfahrgeschwindigkeit der Trägerplattform auf ein Minimum reduziert werden.

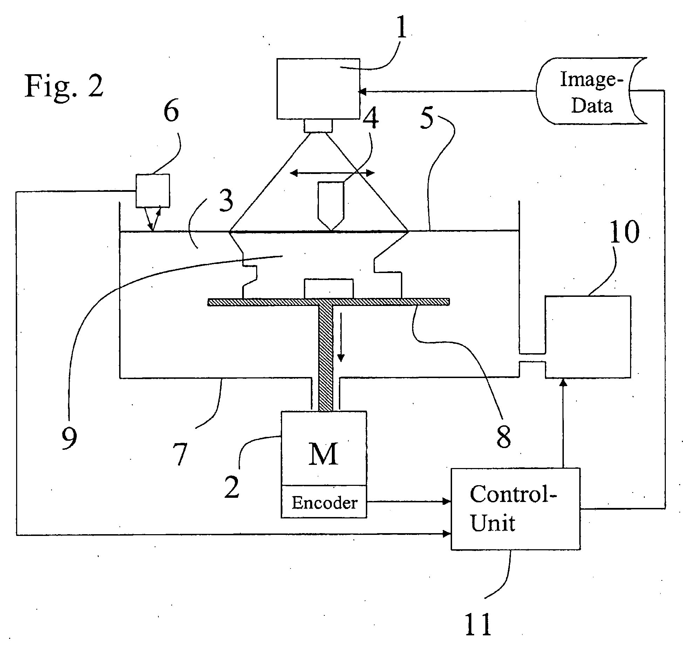

Eine besondere Betriebsweise ist in Fig. 2 gezeigt, die zwar bezüglich Verfahren und Vorrichtung - mit jeweils durch entsprechende Bezugszeichen gezeigten gleichen Bestandteilen - demjenigen der Fig. 1 entspricht, die jedoch die Besonderheit speziell veranschaulicht, daß der Wischer 4 alternierend zu gewünschten Zeitpunkten oder periodisch gleichzeitig während einer Bestrahlungsphase betätigt wird und die Materialoberfläche in der Bauebene glättet. Diese Betriebsweise erlaubt ein kontinuierliches Verfahren ohne Unterbrechung der Bestrahlung, ggf. mit Ausnahme von eventuell für einen neuen Bildaufbau bzw. für das Generieren einer neuen Bestrahlungsmaske erforderlichen kurzen Unterbrechung der Bestrahlung. Bei Bedarf könnten aber auch bei der Betriebsweise nach Fig. 2 zusätzliche Wischanwendungen während optionalen Unterbrechungen der Bestrahlung durchgeführt werden.

Die in Fig. 1 und Fig. 2 dargestellten Ausführungsformen können modifiziert werden. Anstatt daß wie in Fig.1 und 2 einfach die Oberfläche 5 des Photopolymer-Materials 3 die Bauebene definiert, kann zum Beispiel in der Bauebene, in die das Bestrahlungsbild projiziert wird, eine Referenzebene vorgesehen sein. Ferner kann, ergänzend zur Bewegung der Trägerplatte 8 oder stattdessen, die Veränderung des Abstands zwischen Trägerplatte und Bauebene durch ein Anheben des Niveaus (bei 5) bewirkt werden. Dieses Anheben kann durch den Füllstandssensor 6, das Material-Reservoir 10 und die Kontroll-Einheit 11 überwacht und gesteuert werden.

Ferner kann statt einer Belichtung von oben wie in Fig. 1 gezeigt eine inverse Anordnung vorgesehen werden, wobei dann eine Belichtung von unten erfolgt und die oben angeordnete Trägerplatte sich nach oben weg bewegt. Füllstandssensor 6 und Wischer 4 sind bei dieser modifizierten Ausführungsform entbehrlich.

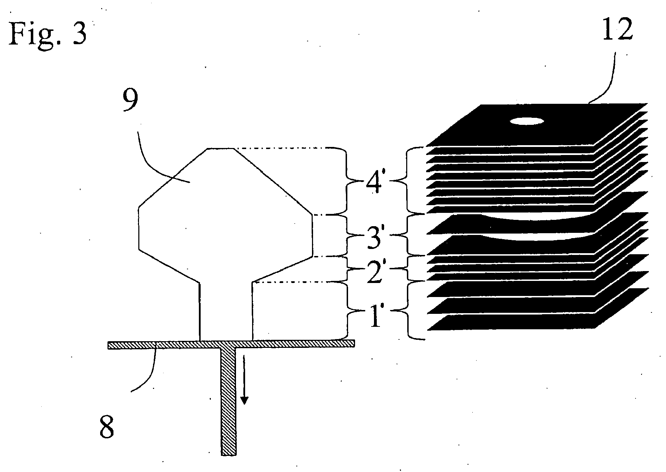

In Fig. 3 wird in einer Detailansicht bezüglich einer weiter bevorzugten Ausführungsform veranschaulicht, daß die vorliegende Erfindung eine sehr variable und dennoch sehr einfache Technik zur Herstellung eines dreidimensionalen Objekts ohne Schichten ermöglicht. Analog Fig. 1 und 2 sind mit den Bezugszeichen 8 und 9 die sich nach unten, von der Bauebene 5 weg bewegende Trägerplattform bzw. das darauf kontinuierlich generierte dreidimensionale Objekt 9 gezeigt. Mit den Abschnitten 1', 2', 3' und 4' sind besondere Baubereiche des dreidimensionalen Objekts 9 bezeichnet. Schematisch angedeutet sind jeweils Bitmaps 12 für den Bildaufbau der bildgebenden Einheit 1, die den entsprechenden Abschnitten 1', 2', 3' und 4' zugeordnet sind. Auf diese Weise wird durch diese beispielhafte Zuordnung prinzipiell veranschaulicht, daß für Bereiche 1',3' des dreidimensionalen Objekts 9, bei denen sich die Außenumrisse praktisch nicht ändern, eine relativ geringe Anzahl und ggf. jeweils sogar nur eine Bitmap 12 erforderlich sind, wohingegen für Bereiche 2',4', bei denen sich die Außenumrisse ändern, eine relativ hohe Anzahl von Bitmaps 12 erforderlich sind. Auch die Verfahrgeschwindigkeit der Trägerplattform kann auf die jeweiligen Bereiche selektiv angepaßt werden, um praktisch schichtenfreie Bereiche zu generieren. So können zum Beispiel für die strukturell einfachen Bereiche 1',3' eine relativ hohe Verfahrgeschwindigkeit, für die strukturell komplizierten Bereiche 2',4' demgegenüber jedoch eine relativ niedrige Verfahrgeschwindigkeit gewählt werden.

Die obige Beschreibung der bevorzugten Ausführungsformen erfolgte lediglich beispielhaft zur Erläuterung; vielmehr sind beliebige Variationen und Kombinationen der beschriebenen Merkmale und Vorteile im Rahmen der Erfindung möglich.

## Patentansprüche

1. Verfahren zur Herstellung mindestens eines dreidimensionalen Objekts, wobei das Verfahren ein Verfestigen eines photopolymerisierbaren Materials durch Maskenbelichtung in einer Bauebene durch elektromagnetische Strahlung von einem digitalen Lichtbearbeitungs-/ digitalen Mikrospiegelvorrichtungs-Maskenprojektionssystem (DLP^{®}/DMD^{®}-Technik) umfasst, wobei eine momentane Durchhärtetiefe des photopolymerisierbaren Materials während eines kontinuierlichen Bauabschnitts durch eine Strahlungsintensität eines jeden individuellen Bildpunkts (Pixels) innerhalb einer projizierten gerasterten Bildmaske und durch die Steuerung der Verfahrgeschwindigkeit der das zu generierende Objekt tragenden Trägerplattform von der Bauebene weg gesteuert wird.

2. Verfahren gemäß Anspruch 1, umfassend eine oder mehrere Bestrahlungsphase(n) und mindestens eine Phase, in der ein Eintrag von elektromagnetischer Strahlung die Bauebene unterbrochen ist, aber weiter der Abstand zwischen der Trägerplattform und der Bauebene verändert wird.

3. Verfahren nach Anspruch 2, wobei die Unterbrechung des Eintrags von elektromagnetischer Strahlung in die Bauebene beschränkt ist auf Phase(n), in denen ein Glättungselement betätigt wird und/ oder in denen ein neuer Bildaufbau erfolgt.

4. Verfahren gemäß Anspruch 2 oder 3, wobei während einer Unterbrechung des Eintrags von elektromagnetischer Strahlung die Bauebene eine Verfahrgeschwindigkeit der Trägerplattform auf ein Minimum reduziert wird.

5. Verfahren einem der vorhergehenden Ansprüche, wobei die Bauebene durch eine Oberfläche des photopolymerisierbaren Materials definiert wird.

6. Verfahren gemäß einem der vorhergehenden Ansprüche, wobei das Projektionssystem elektromagnetische Strahlung in die Bauebene oder Teilbauebene projiziert, ausgehend von Pixeln, welche eine Graustufe oder einen Farbwert besitzen.

7. Verfahren gemäß einem der vorhergehenden Ansprüche, wobei das dreidimensionale Objekt schichtenfrei ist.

8. Verfahren zur Herstellung eines dreidimensionalen Objekts, umfassend:
Bereitstellen eines verfestigbaren Materials, welches bei Belichten durch elektromagnetische Strahlung verfestigt werden kann;
Bereitstellen einer Vielzahl von Bitmaps entsprechend dem dreidimensionalen Objekt;
Bereitstellen eines digitalen Lichtverarbeitungs-/ digitalen Mikrospiegelvorrichtungs-Maskenprojektionssystem (DLP^{®}/DMD^{®}-Technik), um ein verfestigbares Material zu belichten,
wobei das Maskenprojektionssystem elektromagnetische Strahlung auf eine belichtete Oberfläche des verfestigbaren Materials in der Bauebene entsprechend Bildpunkten (Pixeln) projiziert, und jeder Bildpunkt (jedes Pixel) eine Intensität, welche durch einen Graustufenwert oder einen Farbwert definiert ist, aufweist;
Bereitstellen einer Trägerplattform für das Objekt, wobei die Trägerplattform für das Objekt einen Abstand zwischen der Trägerplattform des Objekts und der Bauebene definiert;
und Projizieren von elektromagnetischer Strahlung in die Bauebene entsprechend der Vielzahl von Bitmaps, während die Verfahrgeschwindigkeit der Trägerplattform verändert wird.

9. Verfahren gemäß Anspruch 8, wobei der Schritt des Veränderns des Abstands zwischen der Bauebene und der Trägerplattform des Objekts das Wegbewegen der Trägerplattform des Objekts von der Bauebene umfasst.

10. Verfahren gemäß Anspruch 8, wobei das Objekt einen ersten Abschnitt, welcher einen konstanten Außenumriss besitzt, und einen zweiten Abschnitt, welcher einen sich ändernden Außenumriss umfasst, aufweist, wobei die Vielzahl von Bitmaps eine erste Anzahl von Bitmaps, welche dem ersten Abschnitt entsprechen, und eine zweite Anzahl von Bitmaps, welche dem zweiten Abschnitt entsprechen, umfasst, und die zweite Anzahl größer ist als die erste Anzahl.

11. Verfahren gemäß Anspruch 8, wobei das Objekt schichtenlos ist.

12. Verfahren gemäß einem der vorhergehenden Ansprüche, wobei der Schritt des Projizierens von elektromagnetischer Strahlung in die Bauebene entsprechend der Vielzahl von Bitmaps viele ununterbrochene Bestrahlungsphasen, jedoch mindestens eine Phase ohne oder mit reduzierter Bestrahlung umfasst, wobei während jeder ununterbrochenen Bestrahlungsphase der Abstand zwischen der Trägerplattform des Objekts und der Bauebene verändert wird.
